(19) Europäisches Patentamt
European Patent Office
Office européen des brevets

(11) **EP 1 391 883 B1**

(12) **EUROPEAN PATENT SPECIFICATION**

(45) Date of publication and mention
of the grant of the patent:
**18.04.2007 Bulletin 2007/16**

(51) Int Cl.:
*G11B 5/70* *(2006.01)*　　*G11B 5/714* *(2006.01)*

(21) Application number: **03018905.4**

(22) Date of filing: **20.08.2003**

(54) **Magnetic recording medium**

Magnetisches Aufzeichnungsmittel

Moyen d' enregistrement magnétique

(84) Designated Contracting States:
**DE GB**

(30) Priority: **22.08.2002 JP 2002242641**

(43) Date of publication of application:
**25.02.2004 Bulletin 2004/09**

(73) Proprietor: **HITACHI MAXELL, LTD.
Ibaraki-shi,
Osaka 567-8567 (JP)**

(72) Inventors:
• **Inoue, Tesutaro
Ikeda-shi
Osaka-fu (JP)**
• **Yoshimura, Ken
Fukuchiyama-shi, Kyoto-fu (JP)**
• **Kurusumi, Chikako
Ibaraki-shi
Osaka-fu (JP)**

(74) Representative: **Jönsson, Hans-Peter
Patentanwälte,
von Kreisling Selting Werner,
Deichmannhaus am Dom
50667 Köln (DE)**

(56) References cited:
EP-A- 0 742 550　　　DE-A- 19 752 953
US-A- 4 253 886

EP 1 391 883 B1

**Description**

The present invention relates to a coating type magnetic recording medium produced by forming a non- magnetic layer and a magnetic layer on a flexible support, in particular, a magnetic recording medium suitable for high density recording.

A magnetic tape, which is one type of magnetic recording media, finds various applications such as an audio tape, a video tape, a data-backup tape for computers, etc. In particular, in the field of data-backup tapes, magnetic tapes having recording capacities of several hundred GB or more per reel are commercialized in association with increased capacities of hard discs for backup. Therefore, it is inevitable to increase the capacity of this type of tape for data-backup.

To increase the capacity of the magnetic recording medium, it is necessary to shorten a recording wavelength. To cope with the short recording wavelength, a particle size of a magnetic powder to be used is decreased. A resolution of one bit decreases with the decrease of the recording wavelength. To meet with such a situation, the thickness of the magnetic layer is decreased, and at the same time, a magnetic powder having a small switching field distribution (SFD) should be used. Here, SFD corresponds to the distribution of coercive forces (He), and is defined as follows:

When a magnetization curve (magnetization-magnetic field curve) is measured in the orientation direction of a magnetic layer, a so-called hysteresis loop is obtained. A curve obtained by differentiating the hysteresis loop (dM/dH curve) has a peak around Hc. SFD is expressed by a ratio of $\Delta Hc/Hc$ where $\Delta Hc$ is a half-value width of this peak in the dM/dH curve.

As SFD decreases, a width of a magnetization-transition domain decreases and magnetization reversal becomes sharp, so that a reproducing wave-form is sharpened and also a reproduction output increases. Accordingly, a half value width of a solitary reproducing wave PW50 decreases. Furthermore, as a result of the decrease of the width of a magnetization-transition domain, a noise in a broadband decreases. In combination with the increase of the reproduction output, a C/N ratio, which is most important in reproducing recorded signals, is improved.

As a particle size of powder particles decreases, a surface area of whole particles increases so that the number of active sites having high reactivity on the particle surfaces increases. Accordingly, when a particle size of a magnetic powder decreases, the corrosion resistance of the magnetic powder deteriorates and thus a residual magnetic flux density (Mr) decreases. That is, as a magnetic powder becomes finer, a magnetic recording medium using such a magnetic powder suffers from the decrease of a residual magnetic flux density of a magnetic layer while it is stored, and thus it becomes difficult to maintain storage stability for a long time. When a thickness of a magnetic layer is low, it is difficult to accurately measure a residual magnetic flux density. Therefore, a magnetic property of a magnetic layer is evaluated with an Mrt value, which is a product of a residual magnetic flux density (Mr) and a thickness (t) of a magnetic layer. A Br·$\delta$ value is sometimes used in place of a Mrt value.

A magnetic recording medium using fine magnetic powder particles is disclosed in, for example, JP-A-2000-149242 and JP-A-2000-14 9244 , and a magnetic recording medium using a magnetic powder with low SFD is disclosed in, for example, JP-A-11-283236 and JP-A-11-185240. However, these conventional magnetic recording media have no countermeasure against corrosion, and their long-term storage stability is insufficient.

A magnetic recording medium having a countermeasure against corrosion is disclosed in, for example, JP-A-5-81648 and JP-A-5-81649. However, such a conventional magnetic recording medium has still insufficient corrosion resistance, when a magnetic powder has a very small particle size.

The above JP-A publications disclose some methods for preventing the deterioration of a residual magnetic flux density, but none of them considers the prevention of deterioration of SFD. To maintain the long-term storage stability of a magnetic recording medium and achieve a high recording density, a resolution of one bit should be stably maintained. Thus, it is necessary to adopt some technology to suppress the deterioration of SFD. When SFD deteriorates during storage of a magnetic recording medium, PW50 is widened and therefore the resolution of one bit decreases.

In general, the deterioration of SFD and that of Mrt are not connected with each other. However, in the case of high density recording, when SFD drastically deteriorates, some problems, which have not previously arisen, may arise. Therefore, it is difficult to maintain an error rate which is one of the most important properties of a magnetic recording medium.

In general, the corrosion resistance of a magnetic layer is improved by the improvement of the corrosion resistance of a magnetic powder to be contained in the magnetic layer. The corrosion resistance of a magnetic powder is expressed by a deterioration rate $\Delta\sigma_s$ of a saturation magnetization $\sigma_s$. Here, a deterioration rate $\Delta\sigma_s$ is a rate of the lost amount of a saturation magnetization from the initial saturation magnetization after the magnetic powder is stored at a temperature of 60°C and a relative humidity of 90%RH for 90 days. However, when a deterioration rate $\Delta\sigma_s$ of a saturation magnetization $\sigma_s$ is improved, the initial SFD value of the magnetic powder decreases, which is unfavorable to high density recording. At a current level of technology, it is difficult to produce a magnetic powder having low $\Delta\sigma_s$ and low SFD at the same time.

The present invention intends to solve the above problems of a magnetic recording medium, and an object of the present invention is to provide a magnetic recording medium, which has high density recording characteristics coping with the increase of a recording capacity, and also good corrosion resistance. In other words, the object of the present invention is to provide a magnetic recording medium which has good storage stability and thus can maintain good electromagnetic conversion characteristics after long-term storage, as a magnetic recording medium which copes with the increase of a recording capacity and the increase of a recording density.

In the course of extensive study to achieve the above object, an attention was paid on the fact that an average major axis length of a magnetic powder to be contained in an upper magnetic layer and a SFD value of the upper magnetic layer can be used as parameters in achieving the high density recording characteristics and corrosion resistance of the magnetic recording medium at the same time. Then, it has been found that when an average major axis length of a magnetic powder and a SFD value are respectively within specific ranges, both the high density recording characteristics and corrosion resistance of the magnetic recording medium are improved.

Accordingly, the present invention provides a magnetic recording medium comprising a flexible support, a lower non-magnetic layer comprising a non-magnetic powder and a binder formed on the flexible support, and an upper magnetic layer comprising a ferromagnetic powder and a binder formed on the lower non-magnetic layer, wherein the upper magnetic layer has a SFD (switching field distribution) value of 0.5 or less, the magnetic powder contained in the upper magnetic layer has an average major axis length of 80 nm or less, wherein the addition of an anticorrosive agent to the magnetic paint for the magnetic layer takes place after kneading, dispersing and milling the rest of the components of the magnetic layer, and a SFD value of the upper magnetic layer is 1.2 times or less the initial SFD value (that is, 0.5 or less) after the magnetic recording medium is stored at a temperature of 60°C and a relative humidity of 90%RH for 90 days.

In the magnetic recording medium of the present invention, the thickness of the magnetic layer is preferably 120 nm or less to suppress demagnetization due to a demagnetizing field generated by short wavelength recording and reproducing, namely to avoid the decrease of a head output due to a thickness loss. When the increase of a recording density by the narrowing of a recording track width, etc. is taken into account, a magnetic recording medium is preferably designed so that magnetically recorded signals are reproduced with a reproducing head using a magnetoresistance effect element (a MR head) to enable the reading of an output even when an amount of a leaked magnetic flux from the medium is small.

In the first method, the upper magnetic layer having the above SFD value may be formed by adding a surface-treating agent such as an anticorrosive (for example, boric acid salts, phosphate esters, silane coupling agents, etc.) to a preparation mixture of a magnetic powder, preparing a magnetic paint using a resulting magnetic powder, and applying the magnetic paint on the surface of the lower non-magnetic layer. For example, a magnetic powder, a binder, an abrasive, carbon black and a dispersant are premixed with a powder mixer, the powder mixture and a resin solution are mixed while conveying them with a high-accuracy powder conveying equipment and then charged in and kneaded with a twin-screw kneader, and finally the mixture is dispersed with a sand mill to obtain a magnetic paint for an upper magnetic layer.

In the second method, the upper magnetic layer having the above SFD value may be formed by adding a surface-treating agent to a mixture of components of a magnetic paint and applying the magnetic paint on the surface of the lower non-magnetic layer.

In the third method, the upper magnetic layer having the above SFD value may be formed by using a magnetic powder having an initial SFD value of 0.5 or less and a deterioration rate $\Delta\sigma_s$ of 3% or less. However, at present, it is difficult to produce a magnetic powder having such properties at the same time.

Therefore, it is necessary to attain a low SFD value and a low deterioration rate $\Delta\sigma_s$ by surface-treating a magnetic powder having good SFD as in the first and second methods. Concretely, since the number of active sites on the magnetic powder particles increases as a dispersing step proceeds, the active sites should be covered. Thus, most effectively, the surface-treating agent is added between the dispersing step and a letdown step to form an upper magnetic layer having the above properties at the same time.

The present invention is mainly applied to a magnetic recording medium for digital recording, in particular, a coating type magnetic tape. In the magnetic recording medium of the present invention, a lower non-magnetic layer is formed on at least one surface of a flexible support, and an upper magnetic layer is formed on the lower non-magnetic layer. Particularly when high running reliability is required, a backcoat layer can be formed on a surface of the support opposite to a surface on which the lower non-magnetic layer and the upper magnetic layer are formed.

Hereinafter, the magnetic recording medium of the present invention will be explained in more detail.

<Flexible support>

The magnetic recording medium of the present invention comprises a tape-form flexible support. As a flexible support, any of conventional non-magnetic supports may be used. However, the use of a support containing a magnetic powder is not excluded.

The flexible support preferably has a Young's modulus of at least 5.9 GPa (600 kg/mm$^2$) in a lengthwise direction of the support and a Young's modulus of at least 3.9 GPa (400 kg/mm²) in a widthwise direction of the support, more preferably Young's modulus of at least 9.8 GPa (1000 kg/mm²) in a lengthwise direction and a Young's modulus of at least 7 . 8 GPa (800 kg/mm²) in a widthwise direction. When the Young's modulus in the lengthwise is less than 5 . 9 GPa (600 kg/mm²), the tape running becomes unstable. When the Young's modulus in the widthwise direction is less than 3.9 GPa (400 kg/mm²), the edges of the tape may easily be damaged.

Examples of the flexible support having such Young's moduli include a polyethylene terephthalate film, a polyethylene naphthalate film, a biaxially stretched film of aromatic polyamide and aromatic polyimide, etc.

A thickness of a flexible support depends on the applications of the magnetic recording medium. The thickness of the flexible support is usually from 2 to 7 μm, preferably from 2.5 to 5.5 μm. When the thickness of the support is less than 2 μm, the production of such a thin film is difficult, and the magnetic tape has insufficient strength. When the thickness of the support exceeds 7 μm, the total thickness of the magnetic tape increases so that a recording capacity per one reel decreases.

The surface of the flexible support on which the magnetic layer is formed has a center-line average surface roughness Ra of 2 . 5 to 20 nm. When the center-line average surface roughness Ra is 20 nm or less, the surface unevenness of the lower nonmagnetic layer and also the upper magnetic layer can be made small even when the thickness of the lower non-magnetic layer is low. When the center-line average surface roughness Ra is less than 2 . 5 nm, the runnability of the film in a coating machine is worsened so that the film may be wrinkled and the productivity of the magnetic tape decreases.

<Lower non-magnetic layer>

The lower non-magnetic layer usually contains a nonmagnetic inorganic powder to increase the strength of the layer. Preferred examples of the inorganic powder include metal oxide powders, alkaline earth metal salt powders, etc.

Preferably, granular or acicular iron oxide powder is used. In particular, acicular non-magnetic iron oxide having an axis ratio (a ratio of a major (longer) axis length to a minor (shorter) axis length) of 3 to 10 is used. The particle size of the iron oxide (the major axis length in case of acicular iron oxide powder) is preferably from 50 to 400 nm. When the particle size is less than 50 nm, it is difficult to uniformly disperse the powder in a paint for the lower non-magnetic layer. When the particle size exceeds 400 nm, unevenness increases at the interface between the lower non-magnetic layer and a layer formed directly thereon. The amount of the inorganic powder is preferably from 35 to 83% by weight based on the total weight of the whole inorganic powders. When the amount of the iron oxide powder is less than 35% by weight, the strength of the layer may not sufficiently be increased. When the amount of the iron oxide powder exceeds 83% by weight, the strength of the layer again decreases.

The lower non-magnetic layer preferably contains granular or acicular alumina powder, usually granular alumina. The amount of the alumina powder is preferably from 2 to 30% by weight, more preferably from 8 to 20% by weight, particularly preferably from 11 to 20% by weight, based on the total weight of the whole inorganic powders. When the amount of the alumina powder is less than 2% by weight, the flowability of the paint is insufficient.

When the amount of the alumina powder exceeds 30% by weight, unevenness increases at the interface between the lower non-magnetic layer and the layer formed directly thereon. The particle size of the alumina powder (the major axis length in case of acicular alumina powder) is preferably 100 nm or less, preferably from 10 to 100 nm, more preferably from 30 to 90 nm, more preferably from 50 to 90 nm. If the particle size of alumina exceeds 100 nm, the surface smoothness of the lower non-magnetic layer is not sufficiently improved, when the flexible support has low surface smoothness, for example, a surface roughness of 15 nm or larger on the surface on which the magnetic layer is formed, and the lower non-magnetic layer has a thickness of 1.5 pm or less.

Alumina which is contained in the lower non-magnetic layer is preferably alumina comprising a corundum phase (alphatization rate: 30% or more). When the alumina comprising corundum phase is used, the lower non-magnetic layer has a large Young's modulus with a smaller amount of the alumina than when σ-alumina, θ-alumina or γ-alumina is used, so that the tape strength is increased. The increase of the tape strength decreases the fluctuation of outputs due to waving of tape edges (edge weaving).

In addition to alumina having the above particle size, α-alumina having a particle size of 100 to 800 nm may be added to the lower non-magnetic layer in an amount of 3% by weight or less based on the total weight of the whole inorganic powders.

To increase electrical conductivity, the lower non- magnetic layer may contain carbon black. Examples of carbon black include acetylene black, furnace black, thermal black, etc. Carbon black usually has a particle size of 5 to 200 nm, preferably 10 to 100 nm. When the particle size of carbon black is less than 10 nm, it may be difficult to disperse the carbon black particles in the lower non-magnetic layer since carbon black has a structure. When the particle size of carbon black exceeds 100 nm, the surface smoothness of the lower non-magnetic layer is impaired.

The amount of carbon black to be contained in the lower non-magnetic layer may depend on the particle size of carbon black, and it is preferably from 15 to 40% by weight based on the total weight of the whole non-magnetic powders in the lower non-magnetic layer. When the amount of carbon black is less than 15% by weight, the conductivity may not be sufficiently increased. When the amount of carbon black exceeds 40% by weight, the conductivity-improving effect may saturate. More preferably, carbon black having a particle size of 15 to 80 nm is used in an amount of 15 to 35% by weight, and still more preferably, carbon black having a particle size of 20 to 50 nm is used in an amount of 20 to 30% by weight. When carbon black having the above particle size is used in the above-defined amount, the electrical resistance of the lower non-magnetic layer is decreased and an electrostatic noise and tape-feeding irregularity are suppressed.

The lower non-magnetic layer usually has a thickness of 0.5 to 3 $\mu$m, preferably 1 to 2 $\mu$m. When the thickness of the lower non-magnetic layer is less than 0.5 $\mu$m, it is difficult to coat the layer and thus the productivity decreases. When the thickness of the lower non-magnetic layer exceeds 3 $\mu$m, a recording capacity per one reel decreases.

A conventional primer layer may be formed between the flexible support and the lower non-magnetic layer to increase the adhesion between them. In such a case, the primer layer usually has a thickness of 0.01 to 2 $\mu$m, preferably 0.05 to 0.5 $\mu$m.

<Upper magnetic layer>

Usually, a ferromagnetic iron base metal powder is used as a magnetic powder to be contained in the upper magnetic layer.

The ferromagnetic iron base metal powder preferably has a coercive force of 135 to 279 kA/m (1700 to 3500 Oe) , and a saturation magnetization of 100 to 200 A·m$^2$/kg (100 to 200 emu/g), more preferably 120 to 180 A·m$^2$/kg (120 to 180 emu/g).

The ferromagnetic iron base metal powder preferably has a deterioration rate $\Delta\sigma_s$ of a saturation magnetization of 16% or less, more preferably 10% or less, most preferably 7% or less.

Herein, the magnetic properties of the magnetic powder and those of the magnetic layer, which will be explained below, are measured using a sample-vibration type fluxmeter with applying an external magnetic field of 1.273 MA/m (16 kOe).

The ferromagnetic iron base metal powder usually has an average major axis length of 80 nm or less, preferably 60 nm or less. When the average major axis length exceeds 80 nm, a particle noise due to the particle size of the magnetic powder increases and it becomes difficult to increase a C/N ratio. Preferably, the lower limit of the average major axis length of the ferromagnetic iron base metal powder is 20 nm. When the average major axis length is less than 20 nm, the coercive force decreases, and the aggregation force of the magnetic powder particles increases so that the dispersion of the particles in a paint becomes difficult. The average major axis length is obtained by actually measuring the particle sizes of 200 particles in a transmission electron microphotograph and averaging the measured lengths.

The ferromagnetic iron base metal powder preferably has a BET specific surface area of 35 to 85 m$^2$/g, more preferably 40 to 80 m$^2$/g, most preferably 50 to 70 m$^2$/g.

The upper magnetic layer preferably has a thickness of 1 to 120 nm, more preferably 10 to 90 nm. When the thickness of the upper magnetic layer is less than 1 nm, a leakage magnetic field from the magnetic layer is small so that the head output decreases. When the thickness of the upper magnetic layer exceeds 120 nm, the head output decreases due to a thickness loss.

In the magnetic recording medium, the upper magnetic layer preferably has a coercive force of 135 to 279 kA/m (1700 to 3500 Oe), more preferably 159 to 239 kA/m (2000 to 3000 Oe), in the tape running direction in relation to a head, and a residual magnetic flux density of at least 0.3 T (3000 G) , more preferably 0. 35 to 0.5 T (3500 to 5000 G) , in the longitudinal direction of the tape. When the coercive force is less than 135 kA/m, the output decreases due to demagnetization. When the coercive force exceeds 279 kA/m, the writing with the head is difficult. When the residual magnetic flux density is less than 0.3 T, the output decreases.

In the magnetic recording medium, the upper magnetic layer should have a SFD value of 0.5 or less, preferably 0.1 to 0.5, more preferably 0.1 to 0.4, particularly preferably 0.1 to 0.35. When the SFD value exceeds 0.5, PW50 increases so that the resolution of one bit extremely deteriorates in the case of short wavelength recording and thus the error rate sharply increases. To decrease the SFD value to less than 0.1, the magnetic powder should be further improved. However, such an improvement of the magnetic powder is difficult from a technical viewpoint. Even if such an improvement of the magnetic powder is achieved, the production cost of the magnetic powder increases. When the SFD value exceeds 0.4, the margin of the SFD value is narrowed in the case where the magnetic layer is corroded and the SFD deteriorates.

When the degree of corrosion of the upper magnetic layer is expressed by the change of the SFD value, the SFD value of the upper magnetic layer should be 1.2 times or less, preferably 1.0 to 1.15 times the initial SFD value, after the magnetic recording medium is stored at a temperature of 60°C and a relative humidity of 90%RH for 90 days. When the SFD value after storage exceeds 1.2 times the initial SFD value, the resolution of one bit of a reproduced signal changes after storage, in relation to a recorded signal which is written with the magnetic properties of the initial magnetic layer, so that the reading of the signal becomes difficult, and thus the error rate sharply increases.

When the degree of deterioration of the residual flux density after storage is expressed by the change of Mrt, Mrt is preferably at least 0. 9 times the initial Mrt, after the magnetic recording medium is stored at a temperature of 60°C and a relative humidity of 90%RH for 90 days. If Mrt after storage is less than 0. 9 times the initial Mrt, the magnetic flux density after storage decreases in relation to a recorded signal which is written with the magnetic properties of the initial magnetic layer, so that the sensitivity should be increased for reproducing.

When the magnetic recording medium of the present invention is used with a system comprising a MR head as a reproducing head, a Mrt value, which is a product of a residual magnetic flux density (Mr) and a thickness (t) of a magnetic layer, is preferably 75 nTm (6.0 memu/cm$^2$) or less, more preferably 2.5 to 25 nTm (0.2 to 2.0 memu/cm$^2$), and a squareness ratio is preferably at least 0.85, more preferably 0.90 to 0.97. When Mrt exceeds 75 nTm, almost all MR heads are saturated, that is, the output detected becomes too large so that the heads are saturated. When the squareness ratio is less than 0.85, recording demagnetization is caused by thermal disturbance.

The upper magnetic layer may contain a conventional abrasive. As an abrasive, α-alumina, β-alumina or their mixture, each having a number average particle size of 5 to 150 nm, a particle size distribution of 10 nm or less in terms of a standard deviation and a Mohs' hardness of at least 6, may be used. Among them, corundum alumina (alphatization rate of 30% or more) is particularly preferable. The corundum alumina has a higher hardness than σ-alumina, θ-alumina or γ-alumina and achieves good head cleaning effects with a smaller amount than the latter alumina.

The particle size of the alumina abrasive depends on the thickness of the upper magnetic layer and the average particle size is preferably from 20 to 100 nm, more preferably from 30 to 90 nm. The amount of the abrasive to be contained in the upper magnetic layer is preferably from 50 to 20 parts by weight, more preferably from 8 to 18 parts by weight, based on 100 parts by weight of the ferromagnetic iron base metal powder.

The magnetic layer may contain conventional carbon black (CB) to improve the conductivity and the surface lubricity. As carbon black, acetylene black, furnace black, thermal black, etc. may be used. Carbon black usually has a particle size of 5 to 100 nm, preferably 10 to 100 nm. When the particle size of carbon black is less than 5 nm, the dispersion of carbon black particles is difficult. When the particle size of carbon black exceeds 100 nm, a large amount of carbon black should be added. In either case, the surface of the magnetic layer is roughened and thus the output may decrease.

The amount of carbon black is preferably from 0.2 to 5 parts by weight, more preferably from 0.5 to 4 parts by weight, based on 100 parts by weight of the ferromagnetic iron base metal powder.

<Lubricants>

The lower non-magnetic layer and the upper magnetic layer may contain lubricants having different functions. Preferably, the coefficient of dynamic friction of the magnetic tape against a rotating cylinder or a head island can be decreased, when the lower non-magnetic layer contains 0. 5 to 4.0% by weight of a higher fatty acid and 0.2 to 3.0% by weight of a higher fatty acid ester, based on the weight of the whole inorganic powders in the lower non-magnetic layer. When the amount of the higher fatty acid is less than 0.5% by weight, the effect to decrease the coefficient of dynamic friction is insufficient. When the amount of the higher fatty acid exceeds 4.0% by weight, the lower non-magnetic layer may be plasticized and thus the toughness of the lower non-magnetic layer may be lost. When the amount of the higher fatty acid ester is less than 0.2% by weight, the effect to decrease the coefficient of friction is insufficient. When the amount of the higher fatty acid ester exceeds 3.0% by weight, the amount of the higher fatty acid ester which migrates to the magnetic layer may become large, so that the magnetic tape may stick to the rotating cylinder or the head island.

The coefficient of dynamic friction of the magnetic tape against the rotating cylinder can be decreased, when the upper magnetic layer contains 0.2 to 3. 0% by weight of a fatty acid amide and 0.2 to 3.0% by weight of a higher fatty acid ester, based on the weight of the ferromagnetic iron base metal powder contained in the upper magnetic layer. When the amount of the fatty acid amide is less than 0.2% by weight, the head and the magnetic layer are directly in contact with each other at their interface so that the seizure thereof may not be prevented. When the amount of the fatty acid amide exceeds 3.0% by weight, the fatty acid amide may bleed out and causes a defect such as dropout. When the amount of the higher fatty acid ester is less than 0.2% by weight, the effect to decrease the coefficient of friction is insufficient. When the amount of the higher fatty acid ester exceeds 3.0% by weight, the magnetic tape may stick to the rotating cylinder.

As the fatty acid, higher fatty acids such as lauric acid, myristic acid, palmitic acid, stearic acid, behenic acid, oleic acid, linoleic acid, etc. can be used. As the fatty acid ester, butyl stearate, octyl stearate, amyl stearate, isooctyl stearate, octyl myristate, butoxyethyl stearate, anhydrous sorbitan monostearate, anhydrous sorbitan distearate, anhydrous sorbitan tristearate, etc. can be used. As the fatty acid amide, the amides of palmitic acid, stearic acid and the like can be used.

The intermigration of the lubricants between the magnetic layer and the lower non-magnetic layer is not excluded.

<Binders and other components>

A binder to be contained in the lower non-magnetic layer or the magnetic layer may be a combination of a polyurethane resin and at least one resin selected from the group consisting of a vinyl chloride resin, a vinyl chloride-vinyl acetate copolymer resin, a vinyl chloride-vinyl alcohol copolymer resin, a vinyl chloride-vinyl acetate-vinyl alcohol copolymer resin, a vinyl chloride-vinyl acetate-maleic anhydride copolymer resin, a vinyl chloride-hydroxyl group-containing alkyl acrylate copolymer resin, nitrocellulose, and the like. Among them, a mixture of the vinyl chloride-hydroxyl group-containing alkyl acrylate copolymer resin and the polyurethane resin is preferably used. Examples of the polyurethane resin include polyesterpolyurethane, polyetherpolyurethane, polyetherpolyesterpolyurethane, polycarbonatepolyurethane, polyesterpolycarbonatepolyurethane, etc.

Preferably, a binder comprising a resin having COOH, $SO_3M$, $OSO_2M$, $P=O(OM)_3$, $O-P=O(OM)_2$ [wherein M is a hydrogen atom, an alkali metal base or an amine salt], OH, $NR^1R^2$, $N^+R^3R^4R^5$ [wherein $R^1$ to $R^5$ are each a hydrogen atom or a hydrocarbon group], or an epoxy group as a functional group is used. The reason why such a binder is used is that the dispersibility of the magnetic powder, etc. is improved. When two or more resins are used in combination, it is preferable that the polarities of the functional groups of the resins are the same. In particular, the combination of the resins both having - $SO_3M$ groups is preferable.

The binder is used in an amount of 7 to 50 parts by weight, preferably from 10 to 35 parts by weight, based on 100 parts by weight of the ferromagnetic powder in case of the magnetic layer, or based on total 100 parts by weight of the whole non-magnetic powders in case of the lower non-magnetic layer. In particular, the combination of 5 to 30 parts by weight of the vinyl chloride-based resin and 2 to 20 parts by weight of the polyurethane resin is best.

It is preferable to use a thermally curable crosslinking agent, which bonds with the functional groups in the binder to crosslink the binder. As the crosslinking agent, polyisocyanates, for example, tolylene diisocyanate, hexamethylene diisocyanate, isophorone diisocyanate; reaction products of these isocyanates with compounds having plural hydroxyl groups such as trimethylolpropane; condensation products of these isocyanates, and the like are preferably used.

The crosslinking agent is used in an amount of 10 to 50 parts by weight, preferably 15 to 35 parts by weight, based on 100 parts of the binder.

The upper magnetic layer may contain an anticorrosive, which treats the particle surfaces of the magnetic powder and increases the corrosion resistance of the magnetic powder. Preferable examples of the anticorrosive include boric acid esters (e.g. triethyl borate), phosphate esters (e.g. methyl phosphate) silane coupling agents (e.g. 3-aminopropyltrimethoxy silane), etc.

The amount of the anticorrosive is usually from 1 to 6 parts by weight, preferably from 1.5 to 5 parts by weight, based on 100 parts by weight of the magnetic powder in the upper magnetic layer.

The lower non-magnetic layer and the upper magnetic layer can be formed by applying a paint for the lower non-magnetic layer and a paint for the upper magnetic layer on a flexible support.

Examples of organic solvents to be used to prepare such paints include ketones (e.g. acetone, methyl ethyl ketone, methyl isobutyl ketone, diisobutyl ketone, cyclohexanone, isophorone, tetrahydrofuran, etc.), alcohols (e.g. methanol, ethanol, propanol, butanol, isobutanol, isopropanol, methylcyclohexanol, etc.), esters (e.g. methyl acetate, butyl acetate, isobutyl acetate, isopropyl acetate, ethyl lactate, glycol acetate, etc.), glycol ethers (e.g. glycol dimethyl ether, glycol monoethyl ether, dioxane, etc.), aromatic hydrocarbons (e.g. benzene, toluene, xylene, cresol, etc.), chlorinated hydrocarbons (e.g. carbon tetrachloride, chloroform, ethylenechlorohydrin, chlorobenzene, dichlorobenzene, etc.), N,N-dimethylformamide, hexane, and so on. These organic solvents may be used independently or as a mixture thereof.

<Backcoat layer>

To improve the tape-running performance and to impart antistatistic properties, a backcoat layer may be formed on the other surface of the flexible support (the surface opposite to the surface of the flexible support on which the lower non-magnetic layer and the upper magnetic layer is formed). The thickness of the backcoat layer is preferably from 200 to 800 nm. When the thickness of the backcoat layer is less than 200 nm, the effect to improve the tape-running performance is insufficient. When the thickness of the backcoat layer exceeds 800 nm, the total thickness of the magnetic tape increases, so that the recording capacity per one reel of the tape decreases.

The backcoat layer may be formed by a conventional coating method such as gravure coating, roll coating, blade coating, die coating, etc.

As carbon black (CB) to be contained in the backcoat layer, acetylene black, furnace black, thermal black or the like can be used. Preferably, carbon black with a small particle diameter and carbon black with a large particle diameter are used in combination. The particle diameter (number-average particle diameter) of small particle diameter carbon black is from 5 to 200 nm, preferably from 10 to 100 nm. When the particle diameter of small particle diameter carbon black is less than 5 nm, the dispersion thereof is difficult. When the particle diameter of small particle diameter carbon black exceeds 200 nm, a large amount of carbon black should be added. In either case, the surface of the backcoat layer becomes coarse and thus the surface roughness of the backcoat layer may be transferred to the reverse side of the upper magnetic layer (embossing).

When the large particle diameter carbon black having a particle diameter of 300 to 400 nm is used in an amount of 5 to 15% by weight based on the weight of the small particle diameter carbon black, the surface of the backcoat is not roughened and the effect to improve the tape-running performance is increased. The total amount of the small particle diameter carbon black and the large particle diameter carbon black is preferably from 60 to 98% by weight, more preferably from 70 to 95% by weight, based on the weight of the inorganic powder in the backcoat layer. The center line average height Ra of the surface roughness of the backcoat layer is preferably from 3 to 8 nm, more preferably from 4 to 7 nm.

Preferably, the backcoat layer may contain iron oxide to improve the strength of the backcoat layer. The iron oxide to be contained in the backcoat layer preferably has a particle size of 100 to 600 nm, more preferably 200 to 500 nm. The amount of the iron oxide to be contained in the backcoat layer is preferably from 2 to 40% by weight, more preferably from 5 to 30% by weight, based on the weight of the whole inorganic powders in the backcoat layer.

<Method and conditions for producing a magnetic recording medium>

The lower non-magnetic layer and the upper magnetic layer can be formed by applying a paint for the lower non-magnetic layer and a paint for the upper magnetic layer on one surface of the flexible support. For example, they may be formed by a so-called a wet-on-wet method, in which the paint for the upper magnetic paint is applied on the lower non-magnetic layer formed on the flexible support while the non-magnetic layer is still wet. Thereby, the upper magnetic layer having a thickness of 1 to 120 nm can be formed directly on the lower non-magnetic layer with good accuracy and high productivity. In such a coating method, the paints for the lower non-magnetic layer and the upper magnetic layer are applied on the flexible support substantially at the same time using a die-coating head having two slits for supplying the paints respectively. In this case, to improve the stability of the application of the paints, preferably, an organic solvent contained in the paint for the lower non-magnetic paint has a higher surface tension than that contained in the paint for the upper magnetic layer. Examples of solvents having a high surface tension include cyclohexanone, dioxane, etc.

After the surface coating layer (including the lower non-magnetic layer and the upper magnetic layer formed on one surface of the flexible support) is coated, they may be calendered using metal rolls to suppress the fluctuation of the thickness at the interface between the lower non-magnetic layer and the upper magnetic layer and also the fluctuation of the thickness of the upper magnetic layer. As calender rolls, rolls of heat-resistant resins such as epoxy resins, polyimide resins, polyamide resins, polyamide-imide resins, etc. may be used.

The calendering temperature is preferably at least 70°C, more preferably at least 80°C. The practical upper limit of the calendering temperature is 150°C.

The linear pressure in the calendering process is preferably at least 200 x 9.8 N/cm (200 kg/cm) , more preferably at least 300 x 9. 8 N/cm (300 kg/cm) , and the calendering speed is from 20 m/min. to 700 m/min. The above effect can be enhanced when the calendering is carried out at a temperature of at least 80°C under a linear pressure of at least 300 x 9.8 N/cm (300 kg/cm).

When the lower non-magnetic layer is formed like in the present invention, the saturated magnetic flux density of the upper magnetic layer is increased and also the surface roughness of the surface coating layer is decreased under the same calendering conditions.

The backcoat layer may be formed before, after or during the coating of the surface coating layer and the calendering step. The surface coating layer and the backcoat layer may be aged at a temperature of 40 to 80°C to improve the curing of the surface coating layer and the backcoat layer after the coating of the surface coating layer and the backcoat layer and the calendering step.

The Young's modulus of the surface coating layer is preferably from 40 to 100%, more preferably from 50 to 100%, particularly preferably 60 to 90%, of the average value of the Young's moduli of the flexible support in the lengthwise and widthwise directions. When the surface coating layer has the Young' s modulus in the above range, the magnetic tape has increased durability and the touch between the tape and the head is improved. In other words, when the Young's modulus of the surface coating layer is less than 50% of the average value of the Young's moduli of the flexible support, the durability of the coated film decreases. When it exceeds 100% of the average value of the Young's moduli of the flexible support, the touch between the tape and the head deteriorates. The Young' s moduli of the coating layer including the lower non-magnetic layer and the upper magnetic layer can be controlled by calendering.

Furthermore, the Young's modulus of the lower non-magnetic layer is 80 to 90% of that of the upper magnetic layer. When the Young's moduli of the lower non-magnetic layer and the upper magnetic layer satisfy the above relationship, the lower non- magnetic layer can function as a cushioning layer in the calendering step.

The coefficient of dynamic friction of each of the surface coating layer and the backcoat layer against stainless steel is preferably 0.5 or less, more preferably 0.3 or less.

The surface specific resistance (surface resistivity according to JIS) of the surface coating layer is preferably from $10^4$ to $10^{11}$ ohm/sq. ($10^4$ to $10^{11}$ $\Omega$ according to JIS) , and the surface specific resistance of the back coat layer is preferably from $10^3$ to $10^9$ ohm/sq. ($10^3$ to $10^9$ $\Omega$ according to JIS).

A magnetic tape cartridge, in which a magnetic tape according to the present invention is set, has a large recording capacity per reel and high reliability. Thus, such a magnetic tape cartridge is particularly useful as a data-backup tape for computers.

Examples

The present invention will be illustrated by the following examples, which do not limit the scope of the present invention in any way.

In Examples and Comparative Examples, "parts" are "parts by weight" unless otherwise indicated.

EXAMPLE 1

| «Components of Paint for Upper Magnetic Layer» | |
|---|---|
| (1) | |
| Ferromagnetic iron base metal powder | 100 parts |
| (Co/Fe: 30 atomic %, | |
| Y/(Fe + Co): 3 atomic %, | |
| Al/(Fe + Co): 5 atomic %, | |
| $\sigma_s$: 125 A-m$^2$/kg, | |
| SFD: 0.48, $\Delta\sigma_s$: 10% | |
| Hc: 188 kA/m, pH: 9.5, and | |
| average major axis length: 60 nm) | |
| Vinyl chloride-hydroxypropyl acrylate copolymer | 10 parts |
| (-SO$_3$Na group content: 0.7 x 10$^{-4}$ eq./g) | |
| Polyesterpolyurethane resin | 4 parts |
| (-SO$_3$Na group content: 1.0 x 10$^{-4}$ eq./g) | |
| $\alpha$-Alumina | 15 parts |
| (alphatization rate: 50%, | |
| average particle diameter: 120 nm) | |
| Carbon black | 2 parts |
| (average particle diameter: 75 nm, | |
| DBF oil absorption: 72 cc/100 g) | |
| Methyl acid phosphate | 2 parts |
| Palmitic acid amide | 1.5 part |
| n-Butyl stearate | 1.0 part |
| Tetrahydrofuran | 65 parts |
| Methyl ethyl ketone | 245 parts |
| Cyclohexanone | 85 parts |
| (2) | |
| Triethyl borate (anticorrosive) | 2 parts |
| Cyclohexanone | 140. parts |
| (3) | |
| Polyisocyanate | 4 parts |
| Cyclohexanone | 30 parts |

(continued)

«Components of Paint for Lower Non-magnetic Layer»

(1)

| | |
|---|---|
| Iron oxide particles | 68 parts |
| (average particle diameter: 0.11 x 0.02 $\mu$m) | |
| Alumina | 8 parts |
| (alphatization rate: 50%, | |
| average particle diameter: 70 nm) | |
| Carbon black particles | 24 parts |
| (average particle diameter: 25 nm) | |
| Stearic acid | 2 parts |
| Vinyl chloride copolymer | 10 parts |
| (-SO$_3$Na group content: 0.7 x 10$^{-4}$ eq./g) | |
| Polyester-polyurethane resin | 4.5 parts |
| (Tg: 40°C, -SO$_3$Na group content: 1 x 10$^{-4}$ eq./g) | |
| Cyclohexanone | 25 parts |
| Methyl ethyl ketone | 40 parts |
| Toluene | 10 parts |

(2)

| | |
|---|---|
| Butyl stearate | 1 part |
| Cyclohexanone | 70 parts |
| Methyl ethyl ketone | 50 parts |
| Toluene | 20 parts |

(3)

| | |
|---|---|
| Polyisocyanate | 1.4 parts |
| Cyclohexanone | 10 parts |
| Methyl ethyl ketone | 15 parts |
| Toluene | 10 parts |

A magnetic paint was prepared by kneading the components of Group (1) with a kneader, dispersing the mixture with a sand mill using zirconia beads having a bead diameter of 0.5 mm in a residence time of 45 minutes, then adding the components of Group (2) and dispersing the mixture in a residence time of 2 minutes, and further adding the components of Group (3), followed by stirring and filtering the mixture.

Separately, a paint for a lower non-magnetic layer was prepared by kneading the components of Group (1) with a kneader, adding the components of Group (2) to the mixture, and stirring them, dispersing the mixed components with a sand mill in a residence time of 60 minutes, and adding the components of Group (3), followed by stirring and filtering the mixture.

The paints for the upper magnetic layer and the lower non-magnetic layer were applied by a wet-on-wet method on a flexible support made of a polyethylene terephthalate film (thickness of 6 $\mu$m, Young's modulus in machine direction = 5.9 GPa; manufactured by TORAY) so that the thickness of the upper magnetic layer was 100 nm and the total thickness of the upper magnetic layer and the lower non-magnetic layer was 1.1 $\mu$m after magnetic filed orientation, drying and calendering treatments, and then the applied paint layers were oriented in a magnetic filed, dried and calendered to obtain a magnetic sheet carrying the lower non-magnetic layer and the upper magnetic layer on one surface of the flexible support. The orientation in the magnetic field was carried out by arranging N-N opposed magnets (0.5 T) in front of the drier, and arranging two pairs of N-N opposed magnets (0.5 T) at an interval of 50 cm at a position 75 cm before the finger-touch layer-drying position in the drier . The coating rate was 100 m/min.

| <Components of a paint for backcoat layer> | |
|---|---|
| Carbon black (average particle size: 25 nm) | 80 parts |
| Carbon black (average particle size: 370 nm) | 10 parts |
| Iron oxide (average particle size: 400 nm) | 10 parts |
| Nitrocellulose | 45 parts |
| Polyurethane resin (containing SO$_3$Na groups) | 30 parts |

(continued)

| <Components of a paint for backcoat layer> | |
| --- | --- |
| Cyclohexanone | 260 parts |
| Toluene | 260 parts |
| Methyl ethyl ketone | 525 parts |

The components of a paint for backcoat layer were dispersed with a sand mill in a residence time of 45 minutes and a polyisocyanate (15 parts) was added to the mixture to obtain a paint for backcoat layer. After filtration, the paint was coated on a surface of the magnetic sheet opposite to the surface on which the lower non-magnetic layer and the upper magnetic layer were formed, so that the backcoat layer had a thickness of 0.5 $\mu$m after being dried and calendered, and then, the backcoat layer was dried to finish the magnetic sheet.

The magnetic sheet obtained was planished by seven-stage calendering using metal rolls at a temperature of 100°C under a linear pressure of 150 x 9.8 N/cm (150 kg/cm), and wound around a core and aged at 70°C for 72 hours.

The magnetic sheet was slit to form tapes each having a width of 1/2 inch, and the tape was subjected to a treatment with a lapping tape, blade abrading and surface wiping at a running speed of 200 m/min. to finish a magnetic tape. In this step, a K10000 abrasive tape was used for lapping treatment, a cemented carbide blade was used for blade abrading treatment, and Toraysee® (a tissue manufactured by Toray) was used for wiping treatment. The running tension in such treatment was 0.3 N (30 gf).

The magnetic tape was wound around a reel and set in a casing body of a single-reel type cartridge to obtain a magnetic tape cartridge for use in a computer.

Example 2

A magnetic tape cartridge was produced in the same manner as in Example 1 except that a silane coupling agent (3-aminopropyltrimethoxysilane) (2 parts) was used as an anticorrosive in place of the boric acid salt.

Example 3

A magnetic tape cartridge was produced in the same manner as in Example 1 except that a phosphate ester (methyl phosphate) (2 parts) was used as an anticorrosive in place of the boric acid salt.

Example 4

A magnetic tape cartridge was produced in the same manner as in Example 1 except that a magnetic powder having $\Delta\sigma_s$ of 4% and a SFD value of 0.40 was used in place of the ferromagnetic iron base metal powder.

Example 5

A magnetic tape cartridge was produced in the same manner as in Example 1 except that the thickness of the upper magnetic layer was changed to 150 nm.

Example 6

A magnetic tape cartridge was produced in the same manner as in Example 1 except that a magnetic powder having an average major axis length of 75 nm and a SFD value of 0.39 was used in place of the ferromagnetic iron base metal powder.

Example 7

A magnetic tape cartridge was produced in the same manner as in Example 1 except that a magnetic paint, which was prepared as described below, was used:

| «Components of Paint for Upper Magnetic Layer» | |
| --- | --- |
| (1) | |
| Ferromagnetic iron base metal powder | 100 parts |
| (Co/Fe: 30 atomic %, | |

(continued)

«Components of Paint for Upper Magnetic Layer»

(1)

Y/(Fe + Co): 8 atomic %,

Al/(Fe + Co): 5 atomic %,

$\sigma_s$: 125 A·m$^2$/kg,

SFD: 0.48, $\Delta\sigma_s$: 10%

Hc: 188 kA/m, pH: 9.5, and

average major axis length: 60 nm)

| | |
|---|---|
| Vinyl chloride-hydroxypropyl acrylate copolymer | 10 parts |
| (-SO$_3$Na group content: 0.7 x 10$^{-4}$eq./g) | |
| $\alpha$-Alumina | 15 parts |
| (alphatization rate: 50%, | |
| average particle diameter: 120 nm) | |
| Carbon black | 2 parts |
| (average particle diameter: 75 nm, | |
| DBF oil absorption: 72 cc/100g) | |
| Methyl acid phosphate | 2 parts |
| (2) | |
| Polyesterpolyurethane resin (PU) | 4 parts |
| (-SO$_3$Na group content: 1.0 x 10$^{-4}$ eq./g) | |
| Tetrahydrofuran | 65 parts |
| Methyl ethyl ketone | 245 parts |
| Toluene | 85 parts |
| (3) | |
| Palmitic acid amide | 1.5 parts |
| n-Butyl stearate | 1.0 part |
| Cyclohexanone | 140 parts |
| (4) | |
| Polyisocyanate | 4 parts |
| Cyclohexanone | 30 parts |

The components of Group (1) were kneaded with a kneader, and the powder mixture was mixed with the components of Group (2) while conveying them with a high-accuracy powder conveying machine. Then, the mixture was charged in a twin-screw extruder and kneaded. Thereafter, the mixture was dispersed with a sand mill using zirconia beads having a bead diameter of 0.5 mm in a residence time of 45 minutes, then the components of Group (3) was added and agitated, and the components of Group (4) was added. Finally, the mixture was filtered to obtain a magnetic paint.

Example 8

A magnetic tape cartridge was produced in the same manner as in Example 1 except that a magnetic powder having an average major axis length of 45 nm and a SFD value of 0.48 was used in place of the ferromagnetic iron base metal powder.

Comparative Example 1

A magnetic tape cartridge was produced in the same manner as in Example 1 except that the components of Group (2) were added from the beginning of the kneading of the components of Group (1) and the total residence time was changed to 45 minutes in the preparation process of the magnetic paint.

Comparative Example 2

A magnetic tape cartridge was produced in the same manner as in Example 1 except that a magnetic powder

having $\Delta\sigma_s$ of 4% and a SFD value of 0.40 was used in place of the ferromagnetic iron base metal powder, and that the components of Group (2) were added from the beginning of the kneading of the components of Group (1) and the total residence time was changed to 45 minutes in the preparation process of the magnetic paint.

Comparative Example 3

A magnetic tape cartridge was produced in the same manner as in Example 1 except that a magnetic powder having an average major axis length of 100 nm was used in place of the ferromagnetic iron base metal powder.

Comparative Example 4

A magnetic tape cartridge was produced in the same manner as in Example 1 except that a magnetic powder having an average major axis length of 100 nm was used in place of the ferromagnetic iron base metal powder, and that the components of Group (2) were added from the beginning of the kneading of the components of Group (1) and the total residence time was changed to 45 minutes in the preparation process of the magnetic paint.

Comparative Example 5

A magnetic tape cartridge was produced in the same manner as in Example 1 except that a magnetic powder having an average major axis length of 60 nm and a SFD value of 0.60 was used in place of the ferromagnetic iron base metal powder and the thickness of the upper magnetic layer was changed to 200 nm. <Evaluation of Magnetic Tape Cartridges>
The magnetic tape cartridges produced in Examples and Comparative Examples were evaluated as follows:

- Initial SFD, Increase Rate of SFD and Deterioration Rate of Saturation Magnetization

A magnetic tape in a cartridge was stored at a temperature of 60°C and a relative humidity of 90%RH for 90 days. Before and after storage, the magnetic properties of the magnetic tape were measured using a sample-vibration type fluxmeter with applying a maximum external magnetic field of 1.273 MA/m (16 kOe). In this measurement, a hysteresis loop was recorded, and a SFD value was calculated from the hysteresis loop (main loop).
An SFD increase rate was calculated according to the following formula:

$$\text{SFD increase rate (\%)} = [(\text{SFD after storage}) - (\text{Initial SFD})] \times 100$$

wherein Initial SFD means a SFD before storage.
A deterioration rate of saturation magnetization of a magnetic powder was calculated from the magnetic properties measured before and after storage. That is, a magnetic powder kept in a special vessel was stored at a temperature of 60°C and a relative humidity of 90%RH for 90 days, and then the magnetic properties of the magnetic powder were measured using a sample-vibration type fluxmeter.
A deterioration rate $\Delta\sigma_s$ of saturation magnetization was calculated according to the following formula:

$$\Delta\sigma_s \text{ (\%)} = [|\sigma_s \text{ before storage} - r \text{ storage}|/\sigma_s \text{ before storage}] \times 100$$

wherein $\sigma_s$ is a value obtained by dividing a saturation magnetization at a maximum external magnetic field of 1.273 MA/m (16 kOe) by the weight of the magnetic powder subjected to the measurement.
The smaller $\Delta\sigma_s$ means better corrosion resistance.

- Electromagnetic Conversion Characteristics

To evaluate the electromagnetic conversion characteristics of the magnetic tape, PW50 before storage, output C and noise N were measured using a drum tester as follows:
The drum tester was equipped with an electromagnetic induction type head (track width: 25 $\mu$m, gap: 0.3 $\mu$m)

and a MR head (track width: 8 $\mu$m) so that the induction type head was used for recording, and the MR head, for reproducing. Both heads were arranged at different positions in relation to the rotary drum, and both heads were operated in the vertical direction to match their tracking with each other. A proper length of the magnetic tape was drawn out from the reel in the cartridge and discarded. A further 60 cm length of the magnet tape was drawn out and cut and processed into a tape with a width of 4 mm, which was then wound onto the outer surface of the drum.

To measure PW50, a rectangular wave with a wavelength of 10 um was written on the magnetic tape using a function generator, and the output from the MR head was read by a digital oscilloscope. The half-value width of the solitary wave outputted was converted to a length, which was used as PW50.

To measure an output and a noise, a rectangular wave was inputted to a write amplifier by a function generator. A signal with a wavelength of 0.2 $\mu$m, which was generated by the write amplifier, was written on the magnetic tape. The output from the MR head was amplified with a preamplifier and then read with a spectrum analyzer. A carrier value with a wavelength of 0.2 $\mu$m was used as an output C from the medium. When a rectangular wave with a wavelength of 0.2 $\mu$m was written on the magnetic tape, an integrated value of a difference obtained by subtracting the output and the system noise from a component of a spectrum corresponding to a recording wavelength of 0.2 $\mu$m or longer was used as a noise N. Then, a ratio of an output to a noise (C/N) was calculated. The C/N ratio is expressed as a relative value to that of a DOS 4 tape.

To evaluate the storage stability of the magnetic tapes produced in Examples and Comparative Examples, each magnetic tape was stored at a temperature of 60°C and a relative humidity of 90%RH for 90 days. Then, a proper length of the magnetic tape was drawn out from the reel in the cartridge and discarded. A further 60 cm length of the magnet tape was drawn out, and subjected to the same evaluation methods of the electromagnetic conversion characteristics as described above.

Here, an increase rate of PW50 is calculated according to the following formula:

Increase rate (%) of PW50 =

[|PW50 before storage − PW50 after storage|/PW50 before storage] x 100

The smaller increase rate of PW50 means better storage stability.

The above results are shown in Table 1.

Table 1

| | example | | | | | | | | Comparative example | | | | |
|---|---|---|---|---|---|---|---|---|---|---|---|---|---|
| | 1 | 2 | 3 | 4 | 5 | 6 | 7 | 8 | 1 | 2 | 3 | 4 | 5 |
| $\Delta\sigma_s$ (%) | 10 | 10 | 10 | 4 | 10 | 10 | 10 | 12 | 10 | 4 | 10 | 10 | 10 |
| Thickness of magnetic layer (nm) | 100 | 100 | 100 | 100 | 150 | 100 | 100 | 100 | 100 | 100 | 100 | 100 | 200 |
| Major axis length of magnetic powder (nm) | 60 | 60 | 60 | 60 | 60 | 75 | 60 | 45 | 60 | 60 | 100 | 100 | 60 |
| Initial SFD | 0.50 | 0.50 | 0.50 | 0.42 | 0.50 | 0.42 | 0.50 | 0.48 | 0.50 | 0.42 | 0.50 | 0.50 | 0.60 |
| SFD after storage | 0.55 | 0.56 | 0.57 | 0.47 | 0.55 | 0.47 | 0.54 | 0.57 | 0.64 | 0.55 | 0.55 | 0.56 | 0.67 |
| increase rate of SFD (%) | 10 | 12 | 14 | 12 | 10 | 13 | 8 | 19 | 28 | 30 | 10 | 12 | 11 |
| Initial PW50 (nm) | 350 | 350 | 350 | 320 | 420 | 350 | 350 | 350 | 350 | 320 | 350 | 350 | 500 |

(continued)

| | example | | | | | | | | Comparative example | | | | |
|---|---|---|---|---|---|---|---|---|---|---|---|---|---|
| | 1 | 2 | 3 | 4 | 5 | 6 | 7 | 8 | 1 | 2 | 3 | 4 | 5 |
| Increase rate of PW50 (%) | 3 | 3 | 3 | 3 | 2 | 3 | 1 | 3 | 6 | 7 | 3 | 3 | 3 |
| Initial C/N (dB) | 8.0 | 8.0 | 8.0 | 8.0 | 7.5 | 3.5 | 8.0 | 9.5 | 8.0 | 8.0 | 0.0 | 0.0 | 6.3 |

The magnetic tapes according to the present invention have a lower noise of media, a smaller PW50, a lower increase rate of PW50 and high corrosion resistance than the magnetic tapes of Comparative Examples.

As can be understood from the above, the magnetic recording medium of the present invention has good corrosion resistance while it has the high density recording properties coping with the increase of the capacity. Furthermore, the magnetic recording medium comprising an upper magnetic layer with a thickness of 120 nm or less has a further improved recording density.

## Claims

1. A magnetic recording medium comprising a flexible support, a lower non-magnetic layer comprising a non-magnetic powder and a binder formed on the flexible support, and an upper magnetic layer comprising a ferromagnetic powder and a binder formed on the lower non-magnetic layer, wherein the upper magnetic layer has a SFD (switching field distribution) value of 0.5 or less, the magnetic powder contained in the upper magnetic layer has an average major axis length of 80 nm or less, and a SFD value of the upper magnetic layer is 1,2 times or less the initial SFD value after the magnetic recording medium is stored at a temperature of 60°C and a relative humidity of 90%RH for 90 days, wherein the addition of an anticorrosive agent to the magnetic paint for the magnetic layer takes place after kneading, dispersing and milling the rest of the components of the magnetic layer.

2. The magnetic recording medium according to claim 1, wherein the upper magnetic layer has a thickness of 120 nm or less.

3. The magnetic recording medium according to claim 1, wherein signals which are magnetically recording in the upper magnetic layer are reproduced with a reproducing head comprising a magneto resistance effect element.

4. The magnetic recording medium according to claim 2, wherein signals which are magnetically recording in the upper magnetic layer are reproduced with a reproducing head comprising a magneto resistance effect element.

## Patentansprüche

1. Magnetisches Aufzeichnungsmedium, das Folgendes umfasst: einen flexiblen Träger, eine auf dem flexiblen Träger gebildete untere nichtmagnetische Schicht; die ein nichtmagnetisches Pulver und ein Bindemittel umfasst, und auf der unteren nichtmagnetischen Schicht eine obere magnetische Schicht, die ein ferromagnetisches Pulver und ein Bindemittel umfasst, wobei die obere magnetische Schicht einen SFD-Wert (Schaltfeldverteilung) von 0,5 oder weniger hat, das in der oberen magnetischen Schicht enthaltene magnetische Pulver eine mittlere Länge der Hauptachse von 80 nm oder weniger hat und der SFD-Wert der oberen magnetischen Schicht höchstens 1,2-mal so groß wie der Anfangs-SFD-Wert, nachdem das magnetische Aufzeichnungsmedium 90 Tage lang bei einer Temperatur von 60 °C und einer relativen Feuchtigkeit von 90% RH gelagert wurde, ist, wobei die Zugabe eines Antikorrosionsmittels zum magnetischen Lack für die magnetische Schicht nach dem Kneten, Dispergieren und Mahlen des Rests der Komponenten der magnetischen Schicht erfolgt.

2. Magnetisches Aufzeichnungsmedium gemäß Anspruch 1, wobei die obere magnetische Schicht eine Dicke von 120 nm oder weniger hat.

3. Magnetisches Aufzeichnungsmedium gemäß Anspruch 1, wobei Signale, die in der oberen magnetischen Schicht magnetisch aufgezeichnet werden, mit einem Lesekopf, der ein Magnetowiderstandseffektelement umfasst, reproduziert werden.

4. Magnetisches Aufzeichnungsmedium gemäß Anspruch 2, wobei Signale, die in der oberen magnetischen Schicht magnetisch aufgezeichnet werden, mit einem Lesekopf, der ein Magnetowiderstandseffektelement umfasst, reproduziert werden.

**Revendications**

1. Support d'enregistrement magnétique comprenant un support flexible, une couche non-magnétique inférieure formée sur ledit support flexible, qui comprend une poudre non-magnétique et un liant, et une couche magnétique supérieure formée sur ladite couche non-magnétique inférieure, qui comprend une poudre ferromagnétique et un liant, dans lequel ladite couche magnétique supérieure a une valeur SFD (distribution du champs de retournement) de 0,5 ou moins, la poudre magnétique contenue dans ladite couche magnétique supérieure a une longueur moyenne de l'axe-majeur de 80 nm ou moins, et la valeur SFD de ladite couche magnétique supérieure est 1,2 fois ou moins la valeur SFD initiale après ledit support d'enregistrement magnétique a été gardé à une température de 60 °C et à une humidité relative de 90% pendant 90 jours, dans lequel l'addition d'un agent anti-corrosif à la peinture magnétique pour la couche magnétique a lieu après avoir malaxé, dispersé et broyé les autres composants de ladite couche magnétique.

2. Support d'enregistrement magnétique selon la revendication 1, dans lequel ladite couche magnétique supérieure a une épaisseur de 120 nm ou moins.

3. Support d'enregistrement magnétique selon la revendication 1, dans lequel des signaux enregistrés magnétiquement dans ladite couche magnétique supérieure sont reproduits avec une tête de reproduction qui comprend un élément à effet magnétorésistif.

4. Support d'enregistrement magnétique selon la revendication 2, dans lequel des signaux enregistrés magnétiquement dans ladite couche magnétique supérieure sont reproduits avec une tête de reproduction qui comprend un élément à effet magnétorésistif.